# EUROPEAN PATENT SPECIFICATION

(11) **EP 3 364 613 B1**
(45) Date of publication and mention of the grant of the patent: **10.06.2020**
(21) Application number: 16806910.2
(22) Date of filing: 22.06.2016
(51) Int. Cl.: H04L 12/741, H04L 12/761, H04L 12/721, H04L 12/725

(54) **METHOD AND DEVICE FOR TRANSMITTING TRAFFIC VIA SPECIFIED PATH**
VERFAHREN UND VORRICHTUNG ZUR ÜBERTRAGUNG VON VERKEHR ÜBER EINEN BESTIMMTEN PFAD
PROCÉDÉ ET DISPOSITIF POUR TRANSMETTRE UN TRAFIC VIA UN TRAJET SPÉCIFIÉ

(30) Priority: 14.10.2015 CN 201510673646
(43) Date of publication of application: 22.08.2018
(73) Proprietor: ZTE Corporation, Shenzhen, Guangdong 518057 (CN)
(72) Inventor: ZHANG, Zheng, Shenzhen Guangdong 518057 (CN); WU, Bo, Shenzhen Guangdong 518057 (CN)
(74) Representative: Aipex B.V.
(86) International application number: PCT/CN2016/086762
(87) International publication number: WO 2016/198012

(56) References cited:
- CN-A- 104 811 387
- US-A1- 2015 085 635
- ECKERT CISCO SYSTEMS T ET AL: "Traffic Enginering for Bit Index Explicit Replication BIER-TE; draft-eckert-bier-te-arch-01.txt", TRAFFIC ENGINERING FOR BIT INDEX EXPLICIT REPLICATION BIER-TE; DRAFT-ECKERT-BIER-TE-ARCH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 July 2015 (2015-07-06), pages 1-23, XP015107276, [retrieved on 2015-07-06]
- ZHANG, Z. ET AL.: 'Path Autogeneration in BIER Draft-Zhang-Bier-Path-Autogeneration-00' BIER WG INTERNET -DRAFT 21 December 2015, XP015110404
- ED., WIJNANDS, I.J. ET AL.: 'Multicast Using Bit Index Explicit Replication draft-Ietf-Bier-Architecture-00' INTERNET ENGINEERING TASK FORCE INTERNET -DRAFT 27 April 2015, XP055361863
- ED., WIJNANDS, I.J. ET AL.: 'Encapsulation for Bit Index Explicit Replication in MPLS Networks Draft-Ietf-Bier-Mpls-Encapsulation-00' INTERNET ENGINEERING TASK FORCE INTERNET -DRAFT 27 April 2015, XP015105978

## Description

### TECHNICAL FIELD

The present disclosure relates to, but is not limited to, the field of data communications, and in particular, to a method and device for transmitting a flow via a specified path.

### BACKGROUND

With rapid developments of Software Defined Network (SDN) technology and Network Function Virtualization (NFV) in these years, the controllability of network deployment becomes stronger, and the control complexity increases as well. In particular, intermediate networks such as a core network and a convergence network increasingly become complicated in control means in order to adapt to different services and meet different deployment requirements. In particular, the number of node statuses of the intermediate networks required by multicast applications such as Multicast Virtual Private Net (MVPN) and Internet Television (IPTV) increases exponentially. In order to reduce the control complexity of the intermediate networks, a Bit Indexed Explicit Replication (BIER) technology emerges. The BIER technology can greatly reduce the protocol complexity and intermediate status of the intermediate networks by completely reconstructing a forwarding level. Network forwarding is simplified into being performed only according to bit, which overturns traditional IP forwarding, can very easily implement the transmission of multicast flow in the intermediate network, and greatly facilitates the operation and maintenance of the networks since intermediate network is not required to record any status of the multicast flow.

A core concept of the BIER technology is to use only one BIT to represent each node in the network. The multicast flow is transmitted in the intermediate network, not presented in the form of a multicast IP packet, but encapsulated with a specific BIER header, this header labels each egress node of the multicast flow in the form of bit, and the intermediate network performs routing based on the bit, ensuring that the flow can be transmitted to each egress node. The intermediate network obtains information of each node by extending traditional inter-domain routing protocols Open Shortest Path First (OSPF) and Intermediate System to Intermediate System (ISIS) to enable it to carry BIER protocol-related information such as the bit to achieve the transmission of the information and computing a route arriving at each egress node according to OSPF and ISIS algorithms so as to form a BIER route.

Although the BIER technology implements the transmission of the multicast flow and greatly simplifies the control and management of the intermediate network, this technology has a disadvantage that a function of transmitting a specific flow according to a specified path cannot be implemented, that is, the specific flow cannot be forwarded in the network in a resource guaranteeing manner by computing the specific path. Therefore, how to enable the BIER technology to provide a specific flow guarantee service to the specific flow so as to realize differentiated transmission of different flows in the intermediate network is an urgent problem to be solved. Further relevant technologies are also known from ECKERT CISCO SYSTEMS T ET AL: "Traffic Engineering for Bit Index Explicit Replication BIER-TE; draft-eckert-bier-te-arch-01.txt", TRAFFIC ENGINEERING FOR BIT INDEX EXPLICIT REPLICATION BIER-TE; DRAFT-ECKERT-BIER-TE-ARCH-01.TXT, INTERNET ENGINEERING TASK FORCE, IETF; STANDARDWORKINGDRAFT, INTERNET SOCIETY (ISOC) 4, RUE DES FALAISES CH-1205 GENEVA, SWITZERLAND, 6 July 2015 (2015-07-06), pages 1-23, XP015107276, [retrieved on 2015-07-06].

### SUMMARY

This invention is defined by the appended claims.

The following is an overview of a subject matter detailed in the present disclosure. This summary is not intended to limit a protective scope of the claims.

This invention provides a method and device for transmitting a flow via a specified path as defined in the attached independent claim, which may implement differentiated transmission of different flows in an intermediate network. Further improvements are provided in the dependent claims.

The embodiments of the present disclosure employ the following technical solution.

A method for transmitting a flow via a specified path includes:
transmitting, to at least one next hop node, by an ingress node of a bit indexed explicit replication (BIER) network, information of the specified path through which the flow passes, the information of the specified path is a tree list which has a root served by the ingress node and reaches all egress nodes, and level information of the tree list is used to indicate a level at which each node is located.

Optionally, the information of the specified path is obtained through a routing computation performed by the ingress node or a controller, or generated according to configuration information.

Optionally, the information of the specified path is transmitted via information of a specified path after a header of a BIER packet.

Optionally, the header of the BIER packet further includes a flow constraint identifier which is used to indicate whether the information of the specified path is included or not.

Optionally, a node identifier in the information of the specified path is identified in a manner of a bit-forwarding router identifier (BFR-ID).

Optionally, a set of nodes at an identical level in the information of the specified path is represented by using a bit string.

Optionally, when the set of nodes at the identical level in the information of the specified path is represented by using the bit string, different levels are identified by using a unified bit string length.

Optionally, when the set of nodes at the identical level in the information of the specified path is represented by using the bit string, different levels are identified by using different bit string lengths.

Optionally, the information of the specified path is represented by using a list formed by BFR-IDs of nodes.

Optionally, the information of the specified path is represented by using a bit-forwarding router prefix (BFR-Prefix) list.

Optionally, when the flow is a unicast flow, the level information in the information of the specified path is identical to point-to-multipoint multi-level information, or is preset level information of the unicast flow; and

when the flow is a multicast flow, the level information in the information of the specified path includes different gradable node sets which are differentiated by different identification values.

A method for transmitting a flow via a specified path includes:
obtaining, by a node of a bit indexed explicit replication (BIER) network, information of the specified path through which the flow passes; and
transmitting, by the node of the BIER network, a BIER packet of the flow according to the information of the specified path, the transmitting, by the node of the BIER network, the BIER packet of the flow according to the information of the specified path includes:
continuing to forward, by the node of the BIER network, the BIER packet of the flow to a node at a next level of a current node in the information of the specified path; and
when the node of the BIER network is an egress node, forwarding the BIER packet of the flow out of the BIER network by the node of the BIER network, and clearing information of the current node in egress node information of the flow by the node of the BIER network.

Optionally, the continuing to forward, by the node of the BIER network, the BIER packet of the flow to the node at the next level of the current node in the information of the specified path includes:
obtaining, by the node of the BIER network from a BIER forwarding table, an entry that indicates a next-hop node is a node at a current level in the information of the specified path;
performing a computation on bit information in the obtained entry and bit information of an egress node to obtain bit information of a reserved node; and
performing a computation on the bit information of the reserved node, the bit information in the obtained entry, and the bit information of the egress node, modifying level information of the information of the specified path, and continuing to forward a BIER packet of the flow.

Optionally, the performing the computation on the bit information in the obtained entry and the bit information of the egress node to obtain the bit information of the reserved node includes:
performing an AND operation on the bit information in the obtained entry and the bit information of the egress node, performing a NOT operation on a result of the AND operation, and performing an AND operation on a result of the NOT operation and a bit string of the egress node to obtain a bit string of a reserved node set.

Optionally, the performing the computation on the bit information of the reserved node, the bit information in the obtained entry, and the bit information of the egress node includes:
performing an AND operation on the bit information in the obtained entry and the bit information of the egress node, and performing an OR operation on a result of the AND operation and the bit string of the reserved node set to obtain a computation result.

Optionally, the modifying the level information in the information of the specified path includes:
adding 1 to the current level of the information of the specified path to obtain the modified level information of the information of the specified path; or
deleting a foremost sibling list in the information of the specified path, and subtracting a length of deleted current level of nodes from a total length of the information of the specified path to obtain modified information of the specified path.

Optionally, the transmitting, by the node of the BIER network, the BIER packet of the flow according to the specified path information includes:
when a node at a next level of a current node in the information of the specified path is a node that does not support BIER forwarding, or a node that supports only BIER forwarding and does not support processing of a BIER specified path, communicating, by the node of the BIER network through establishing a tunnel, with a node in the information of the specified path whose level is below the node at the next level and which supports processing of the BIER specified path.

Optionally, the method further includes: when a link in the specified path through which the flow passes has an equal-cost routing link, indicating to transmit the flow by using the equal-cost routing link.

A device for transmitting a flow via a specified path, which is disposed at an ingress node of a bit indexed explicit replication (BIER) network and includes:
a first transmission module, which is configured to transmit, to at least one next hop node, information of the specified path through which the flow passes, the information of the specified path is a tree list which has a root served by the ingress node and reaches all egress nodes, and level information of the tree list is used to indicate a level at which each node is located.

Optionally, the information of the specified path is obtained through a routing computation performed by the ingress node or a controller, or generated according to configuration information.

Optionally, the information of the specified path is transmitted via information of a specified path after a header of a BIER packet.

Optionally, the header of the BIER packet further includes a flow constraint identifier which is used to indicate whether the information of the specified path is included or not.

Optionally, a node identifier in the information of the specified path is identified in a manner of a bit-forwarding router identifier (BFR-ID).

Optionally, a set of nodes at an identical level in the information of the specified path is represented by using a bit string.

Optionally, when the set of nodes at the identical level in the information of the specified path is represented by using the bit string, different levels are identified by using a unified bit string length.

Optionally, when the set of nodes at the identical level in the information of the specified path is represented by using the bit string, different levels are identified by using different bit string lengths.

Optionally, the information of the specified path is represented by using a list formed by BFR-IDs of nodes.

Optionally, the information of the specified path is represented by using a bit indexed forwarding router prefix (BFR-Prefix) list.

Optionally, when the flow is a unicast flow, the level information in the information of the specified path is identical to point-to-multipoint multi-level information, or is preset level information of the unicast flow.

When the flow is a multicast flow, the level information in the information of the specified path includes different gradable node sets which are differentiated by different identification values.

A device for transmitting a flow via a specified path, which is disposed at a node of a bit indexed explicit replication (BIER) network and includes:
an obtaining module, which is configured to obtain information of the specified path through which the flow passes; and
a second transmission module, which is configured to transmit a BIER packet of the flow according to the information of the specified path, the second transmission module includes:
a first processing sub-module, which is configured to continue to forward the BIER packet of the flow to a node at a next level of a current node in the information of the specified path; and
when the node of the BIER network is an egress node, forward the BIER packet of the flow out of the BIER network, and clear information of the current node in egress node information of the flow.

Optionally, the first processing sub-module includes:
an obtaining unit, which is configured to obtain, from a BIER forwarding table, an entry that indicates a next-hop node is a node at a current level in the information of the specified path;
a computation unit, which is configured to perform a computation on bit information in the obtained entry and bit information of an egress node to obtain bit information of a reserved node; and
a processing unit, which is configured to perform a computation on the bit information of the reserved node, the bit information in the obtained entry, and the bit information of the egress node, modify level information of the information of the specified path, and continue to forward the BIER packet of the flow.

Optionally, the computation unit performs the computation on the bit information in the obtained entry and the bit information of the egress node to obtain the bit information of the reserved node through:
performing an AND operation on the bit information in the obtained entry and the bit information of the egress node, performing a NOT operation on a result of the AND operation, and performing an AND operation on a result of the NOT operation and a bit string of the egress node to obtain a bit string of a reserved node set.

Optionally, the processing unit performs the computation on the bit information of the reserved node, the bit information in the obtained entry, and the bit information of the egress node includes:
performing an AND operation on the bit information in the obtained entry and the bit information of the egress node, and performing an OR operation on a result of the AND operation and the bit string of the set of reserved node to obtain a computation result.

Optionally, the processing unit modifies the level information of the information of the specified path through:
adding 1 to the current level of the information of the specified path to obtain modified level information of the information of the specified path; or
deleting a foremost sibling list in the information of the specified path, and subtracting a length of deleted current level of nodes from a total length of the information of the specified path to obtain modified information of the specified path.

Optionally, the second transmission module transmits the BIER packet of the flow according to the specified path information through:
when a node at a next level of a current node in the information of the specified path is a node that does not support BIER forwarding, or a node that supports only BIER forwarding and does not support processing of a BIER specified path, communicating with a node in the information of the specified path whose level is below the node at the next level and which supports processing of the BIER specified path by establishing a tunnel.

Optionally, the second transmission module is further configured to, when a link in the specified path through which the flow passes has an equal-cost routing link, indicate to transmit the flow by using the equal-cost routing link.

A computer-readable storage medium is provided, which stores computer-executable instructions therein, where the computer-executable instructions are used to perform the above-mentioned method.

In a network where a flow can only be forwarded using a shortest path, the embodiments of the present disclosure can achieve forwarding a flow in a BIER network according to a specified path, thereby adapting to various deployment requirements such as resource scheduling, making full use of redundant links, and leading to high practicality and adaptability.

Other aspects may be understood upon reading and understanding accompanying drawings and detailed description.

### BRIEF DESCRIPTION OF DRAWINGS

FIG. 1 is a schematic diagram of forwarding a flow in a BIER network in the related art;
FIG. 2 is a flow chart of a method for transmitting a flow via a specified path according to an embodiment of the present disclosure;
FIG. 3 is a flow diagram of a forwarding process according to an embodiment of the present disclosure;
FIG. 4 is a schematic diagram of forwarding via a determined path according to an embodiment of the present disclosure;
FIG. 5 is a schematic diagram showing a network for forwarding a specific flow and an ordinary flow according to an embodiment of the present disclosure;
FIG. 6 is a schematic diagram showing a network for forwarding a specific flow in an equal-cost multipath (ECMP) link according to an embodiment of the present disclosure;
FIG. 7 is a schematic diagram showing a hybrid network for implementing forwarding via a specified path according to an embodiment of the present disclosure;
FIG. 8 is a schematic diagram showing a BIER-capable hybrid network for implementing forwarding via a specified path according to an embodiment of the present disclosure;
FIG. 9 is a schematic diagram showing a BIER header according to an embodiment of the present disclosure;
FIG. 10 is a first schematic diagram showing a BIER extended specified path node list Type-Length-Value (TLV) according to an embodiment of the present disclosure;
FIG. 11 is a second schematic diagram showing a BIER extended specified path node list TLV according to an embodiment of the present disclosure;
FIG. 12 is a third schematic diagram showing a BIER extended specified path node list TLV according to an embodiment of the present disclosure;
FIG. 13 is a fourth schematic diagram showing a BIER extended specified path node list TLV according to an embodiment of the present disclosure; and
FIG. 14 is a structural diagram of a device for transmitting a flow via a specified path according to an embodiment of the present disclosure.

### DETAILED DESCRIPTION

It should be noted that embodiments in the present application and features in the embodiments may be combined with each other in case of no conflict.

It should be noted that terms "first", "second", and the like in the specification and claims of the present application as well as in the above accompanying drawings are used to distinguish similar objects and are not necessarily used to describe a specific sequence or precedence order.

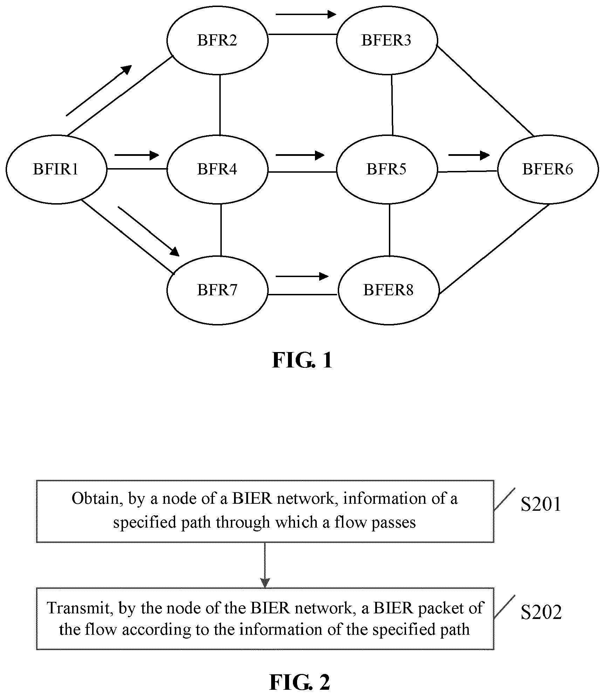

FIG. 1 is a schematic diagram of flow forwarding in a BIER network in the related art. For example, a multicast flow has an ingress which is a BFIR (Bit-Forwarding Ingress Router) such as BFIR 1 in FIG. 1, and an egress which is a BFER (Bit-Forwarding Egress Router) such as BFER 3, BFER 6 and BFER 8 in FIG. 1. The BIER network further includes a BFR (Bit-Forwarding Router), for instance, BFR 2, BFR 4, BFR 5 and BFR 7 in FIG. 1. The flow is forwarded in the BIER network according to a shortest path in the related art, that is, the flow arrives at an egress of the BIER network via the following shortest paths:
BFIR1-BFR2-BFER3;
BFIR1-BFR4-BFR5-BFER6; and
BFIR1-BFR7-BFER8.

However, if it is intended, due to resource scheduling or other needs, to transmit the flow via the following paths:
BFIR1-BFR4-BFR5-BFER3/BFER6; and
BFIR1-BFR7-BFER8,
those paths cannot be achieved with the BIER technology in the related art.

Accordingly, a method for transmitting a flow via a specified path is provided in an embodiment.

The method includes: transmitting, by an ingress node of a BIER network, information of a specified path through which the flow passes.

Optionally, before transmitting, by the ingress node of the BIER network, the information of the specified path through which the flow passes, the method further includes: generating, by the ingress node of the BIER network, the information of the specified path through which the flow passes.

Optionally, the information of the specified path is obtained through a routing computation performed by the ingress node or a controller, or is generated according to configuration information.

Optionally, the information of the specified path is transmitted via information of a specified path after a header of a BIER packet.

Optionally, the header of the BIER packet further includes a flow constraint identifier which is used to indicate whether the information of the specified path is included or not.

Optionally, the information of the specified path is a tree list which has a root served by the ingress node and reaches each egress node, and level information of the tree list is used to indicate a level at which each node is located.

Optionally, a node identifier in the information of the specified path is identified in a manner of a bit-forwarding router identifier (BFR-ID).

Optionally, a set of nodes at an identical level in the information of the specified path is represented by using a bit string.

Optionally, when the set of nodes at the identical level in the information of the specified path is represented by using the bit string, different levels are identified by using a unified bit string length.

Optionally, when the set of nodes at the same level in the information of the specified path is represented by using the bit string, different levels are identified by using different bit string lengths.

Optionally, the information of the specified path is represented by using a list formed by BFR-IDs of nodes.

Optionally, the information of the specified path is represented by using a bit-forwarding router prefix (BFR-Prefix) list.

Optionally, when the flow is a unicast flow, level information in the information of the specified path is identical to point-to-multipoint multi-level information, or is preset level information of the unicast flow.

When the flow is a multicast flow, level information in the information of the specified path includes different gradable node sets which are differentiated by different identification values.

As can be seen from the above, according to the method provided by the embodiment of the present disclosure, in a network where a flow can only be forwarded using a shortest path, an ingress node of a BIER network can enable other nodes to achieve forwarding the flow in the BIER network according to a specified path, by transmitting information of the specified path through which the flow passes. The method can adapt to various deployment requirements such as resource scheduling, make full use of redundant links, and has high practicality and adaptability.

FIG. 2 is a flow chart of a method for transmitting a flow via a specified path according to an embodiment of the present disclosure. The method shown in FIG. 2 includes steps 201 to 202.
Step 201 includes obtaining, by a node of a BIER network, information of a specified path through which a flow passes.
Step 202 includes transmitting, by the node of the BIER network, a BIER packet of the flow according to the information of the specified path.

Optionally, the transmitting, by the node of the BIER network, the BIER packet of the flow according to the information of the specified path includes:
continuing to forward, by the node of the BIER network, the BIER packet of the flow to a node at a next level of a current node in the information of the specified path;
where when the node of the BIER network is an egress node, the node of the BIER network forwards the BIER packet of the flow out of the BIER network, and clears information of the current node in egress node information of the flow.

Optionally, the continuing to forward, by the node of the BIER network, the BIER packet of the flow to the node at the next level of the current node in the information of the specified path includes:
obtaining, by the node of the BIER network from a BIER forwarding table, an entry that indicates a next-hop node is a node at a current level in the information of the specified path;
performing a computation on bit information in the obtained entry and bit information of an egress node to obtain bit information of a reserved node; and
performing a computation on the bit information of the reserved node, the bit information in the obtained entry, and the bit information of the egress node, modifying level information in the information of the specified path, and continuing to forward the BIER packet of the flow.

Optionally, the performing the computation on the bit information in the obtained entry and the bit information of the egress node to obtain the bit information of the reserved node includes:
performing an AND operation on the bit information in the obtained entry and the bit information of the egress node, performing a NOT operation on a result of the AND operation, and performing an AND operation on a result of the NOT operation and a bit string of the egress node to obtain a bit string of a reserved node set.

Optionally, the performing the computation on the bit information of the reserved node, the bit information in the obtained entry, and the bit information of the egress node includes:
performing an AND operation on the bit information in the obtained entry and the bit information of the egress node, and performing an OR operation on a result of the AND operation and the bit string of the reserved node set to obtain a computation result.

Optionally, the modifying the level information in the information of the specified path includes:
adding 1 to the current level in the information of the specified path to obtain modified level information in the information of the specified path; or
deleting a foremost sibling list in the information of the specified path and subtracting a length of deleted current level of nodes from a total length of the information of the specified path, to obtain modified information of the specified path.

Optionally, the transmitting, by the node of the BIER network, the BIER packet of the flow according to the information of the specified path includes:
when a node at a next level of the current node in the information of the specified path is a node that does not support BIER forwarding, or a node that supports only BIER forwarding and does not support processing of a BIER specified path, communicating, by the node of the BIER network through establishing a tunnel, with a node in the information of the specified path whose level is below the node at the next level and which can support processing of the BIER specified path.

In this optional solution, if a node that does not support BIER forwarding exists between two BIER nodes on the path, or a node that only supports BIER forwarding and does not support processing of a BIER specified path exists between the two BIER nodes, a tunnel is established between the two BIER nodes for communication. A passed node that does not support the BIER forwarding will not perceive a BIER header and contents therein. A passed node that does not support the processing of the BIER specified path will only perform an ordinary BIER forwarding.

Optionally, the method may further include: when a link in the specified path through which the flow passes has an equal-cost routing link, indicating to transmit the flow by using the equal-cost routing link.

As can be seen from the above, according to the method provided by the embodiment of the present disclosure, in a network where a flow can only be forwarded using a shortest path, a node of a BIER network can enable other nodes to finish forwarding the flow in the BIER network according to a specified path, by transmitting information of the specified path through which the flow passes. The method can adapt to various deployment requirements such as resource scheduling, make full use of redundant links, and has high practicality and adaptability.

To sum up, it can be seen that, according to the method for transmitting the flow via the specified path provided in the embodiment of the present disclosure, the ingress node of the network BIER encapsulates the BIER header and a path list according to the information of the egress node of a specific flow and the information of the specified path. Each node of the BIER network performs processing according to the specified list by using the method provided by the embodiment of the present disclosure in addition to an existing BIER forwarding technology, and the node of the BIER network finishes forwarding of the specific flow via the specified path.

By means of the above steps, the flow that can be forwarded only by using the shortest path now can be forwarded in the BIER network according to the specified path, and the method can adapt to various deployment requirements such as resource scheduling, make full use of redundant links, and has a high practicality and adaptability.

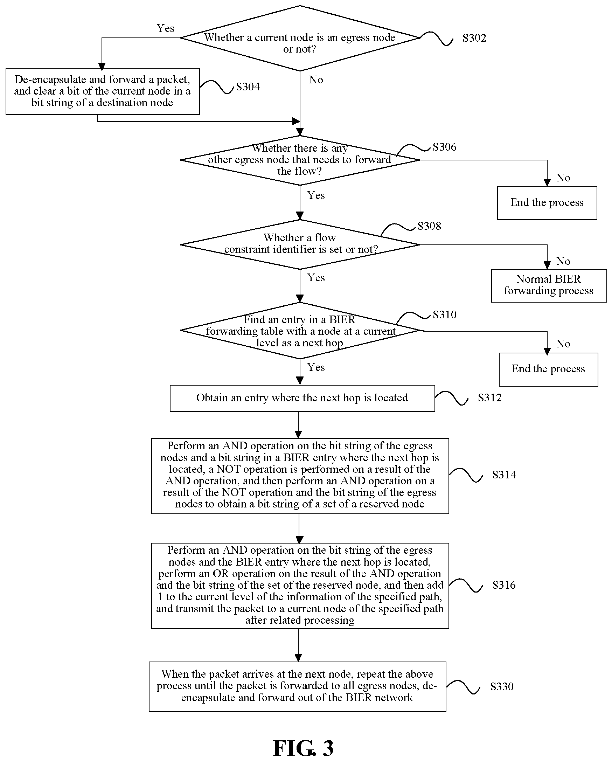

FIG. 3 is a flow chart of a forwarding process according to an embodiment of the present disclosure. As shown in FIG. 3, the process includes the following steps S302 to S330.

In step S302, when a node of a BIER network receives a packet (that is, a flow) and the packet needs to be forwarded, a routing lookup operation is performed according to information of egress nodes in a BIER header encapsulation to determine whether a current node is one egress node or not.

If the current node is one egress node, step S304 is performed, and then step S306 is performed; and if the current node is not the egress node, step S306 is directly performed.

In step S304, the packet is de-encapsulated and forwarded out of the BIER network; and a current node bit in a bit string of the egress nodes is cleared (that is, information of the current node in the information of the egress nodes of the flow is cleared).

In step S306, according to the information of the egress nodes of the BIER header, it is determined whether there is any other egress node that needs to forward the flow.

If there is any other egress node that needs to forward the flow, step S308 is performed; if there is no other egress node that needs to forward the flow, the process ends.

In step S308, according to setting information of a flow constraint identifier, it is determined whether there is information of a specified path that needs to be processed.

If the flow constraint identifier is not set, it indicates that no information of a specified path needs to be processed, and a normal BIER forwarding process is performed; and if the flow constraint identifier is set, it indicates that information of a specified path needs to be processed, and step S310 is performed.

In step S310, the information of the specified path is obtained, a set of nodes at a current level is taken out, and a BIER forwarding table is searched to find whether there is an entry that indicates a next hop is a node in the set of nodes at the current level.

In the BIER forwarding table, if no entry indicating a node at the current level severs as the next hop is found, the process ends. If an entry indicating a node at the current level serves as the next hop is found, step S312 is performed.

It should be noted that if a node that does not support BIER forwarding is skipped or a node that only supports BIER forwarding but does not support BIER forwarding via the specified path is skipped, an entry that indicates a node at the current level serves as the next hop can be found because a tunnel link is established.

In step S312, an entry where the next hop is located is obtained.

In step S314, an AND operation is performed on the bit string of the egress nodes and a bit string in a BIER entry where the next hop is located; after a result of the AND operation is obtained, a NOT operation is performed on the result of the AND operation; and then an AND operation is performed on the result of the NOT operation and the bit string of the egress nodes to obtain a bit string of a reserved node set.

In step S316, an AND operation is performed on the bit string of the egress nodes and the BIER entry where the next hop is located, an OR operation is performed on the result of the AND operation and the bit string of the reserved node set, and then 1 is added to the current level in the information of the specified path, and the packet is transmitted to a current node of the specified path after related processing.

Optionally, step S326 may also be included, juxtaposed with the step S316, and one of the steps S316 and S326 may be selected to perform.

In step S326, the foremost sibling list in the information of the specified path is deleted, a length of the deleted list of nodes at an identical level is subtracted from a TLV length, and the encapsulated packet is forwarded according to a BIER forwarding manner.

In step S330, when the packet arrives at a next node, the above procedure is repeated, and finally, the packet is forwarded to the egress node, and the egress node finishes de-encapsulation of the packet and forwards the packet out of the BIER network.

In an optional embodiment, a form of the information of the path is specified, and a set of nodes at an identical level may use a BIER-related technology to identify a bit string generated after an OR operation performed on the bit of each node at this level.

In an optional embodiment, a form of the information of the path is specified, and a set of nodes at an identical level may be a list formed by BFR-IDs of respective nodes.

In an optional embodiment, a form of the information of the path is specified, and a set of nodes at an identical level may be a list of BFR-Prefixes of respective nodes.

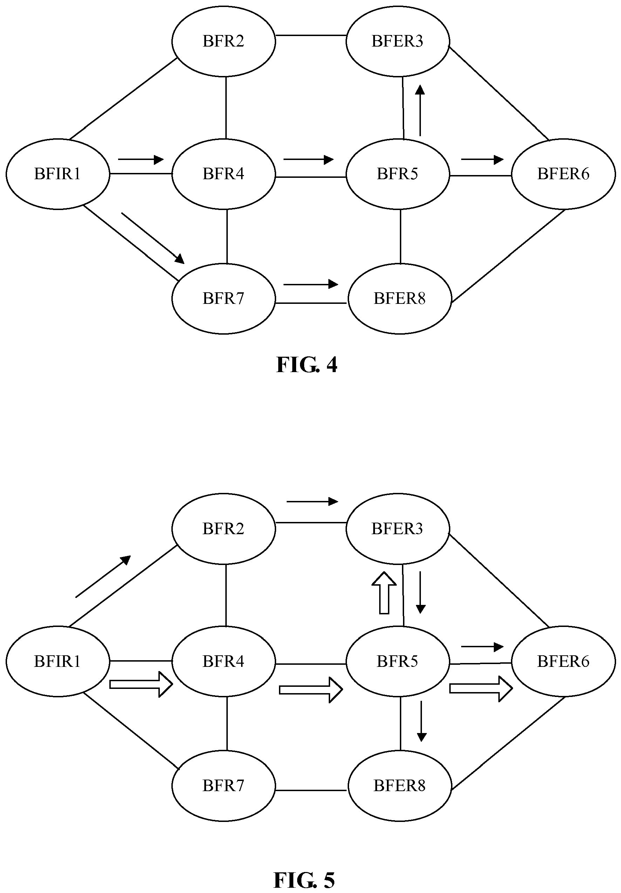

FIG. 4 is a schematic diagram of forwarding via a determined path according to an embodiment of the present disclosure. It is assumed that a specified path for a specific flow includes BFIR1-BFR4-BFR5-BFER3/BFER6 and BFIR1-BFR7-BFER8. A flow shown in FIG.4 includes the following steps 402 to 416.

In step 402, a BIER header is firstly encapsulated at an ingress node BFIR1, and bits of the egress nodes BFER3/BFER6/BFER8 are encapsulated according to a BIER header encapsulation technology in the related art, and a flow constraint identifier is set.

In step 404, the specified path is encapsulated into a TLV of information of the specified path, where a length of the TLV is a total length of the path, and the specified path is encapsulated as follows: nodes BFR4/BFR7 at a first level, nodes BFR5/BFER8 at a second level, and nodes BFER3/BFER6 at a third level; and a node at a current level is at the first level.

In step 406, when forwarding is performed, a BIER forwarding entry search operation is firstly performed on the egress nodes to determine whether a current node is one egress node, and if the current node is one egress node, the flow is de-encapsulated and forwarded out of the BIER network and a bit of the current node (that is, the information of the current node) in a bit string of the egress nodes is cleared.

In step 408, if the flow needs to arrive at any other node, a flow from the BFER3 is no longer directly forwarded to the BFR2 according to the shortest path, instead, according to the current level in the information of the specified path, only BIER forwarding entries which indicate next hops are BFR4 and BFR7 respectively are found. After an AND operation is performed on the two entries and the bit string of the egress nodes of the BIER, a NOT operation is performed on a result of the AND operation, and then an AND operation is further performed on a result of the NOT operation and the bit string of the egress nodes to obtain a bit string of a reserved node set, which is BFER3.

In step 410, the bit strings of the reserved node sets obtained after the bit string of the egress nodes is operated according to the two entries respectively are merged, and the level of the current node in the specified path is added by 1, and the flow is transmitted to a next node after related processing. Egress nodes of a packet transmitted to the BFR4 are BFER3 and BFER6; and the egress node of the packet transmitted to the BFR7 is BFER8.

In step 412, when the BFR4 and the BFR7 receive the packets, the steps 406 to 410 are repeated, the BFR4 transmits the packet to a node BFR5 at a next level, and the egress nodes are BFER3 and BFER6. The egress node of the packet transmitted to the BFER8 by the BFR7 is BFER8.

In step 414, the BFR5 and the BFER8 receive the packets, the steps 406 to 410 are repeated, the packet from BFR5 is transmitted to the next nodes BFER3 and BFER6, and the egress nodes are the BFER3 and the BFER6 respectively. The BFER8 terminates at the current node, de-encapsulates the packet and forwards it out of the BIER network.

In step 416, the BFER3 and the BFER6 receive the packets, the steps 406 to 410 are repeated, the BFER3 and the BFER6 each terminate at the current node, de-encapsulate the packets and forward them out of the BIER network.

FIG. 5 is a schematic diagram showing a network for forwarding a specific flow and an ordinary flow according to an embodiment of the present disclosure.

With reference to FIG. 1, forwarding via a specified path BFIR1-BFR2-BFER3-BFR5-BFER6/BFER8 is to be implemented, where egress nodes are BFER6 and BFER8. Ordinary flow forwarding destinations are BFER3 and BFER6. Steps include the following steps S502 to S512.

In step 502, a specific flow and an ordinary flow are respectively encapsulated at an ingress node BFIR1, the egress nodes BFER6/BFER8 are encapsulated for the specific flow, and then a specified path is encapsulated, a current level is 1, a flow constraint identifier is set. The egress nodes BFER3/BFER6 are encapsulated for the ordinary flow.

In step 504, after receiving the flows to be forwarded, the BFIR1 firstly performs a BIER forwarding table search operation on the egress nodes, and finds that a current node is not the egress node; and then since the flow constraint identifier is set, information of the specified path is processed, and a node at the current level is found as the BFR2, an entry in the BFER forwarding table with a next hop of BFR2 is taken out, an AND operation is performed on the entry and each egress node, a NOT operation is performed on a result of the AND operation, and then an AND operation is performed on the result of the NOT operation and each egress node, to obtain nodes BFER6/BFER8 that need to be reserved (assuming that next hops for shortest paths of arriving at BFER6/BFER8 are BFR4/BFR7). After the next hop is forwarded normally, the information of the reserved node is merged in the BIER encapsulation header, the information of the specified path is subjected to related processing, and the packet is forwarded to the next hop node BFR2. When BFIR1 processes the ordinary flow, BFIR1 directly searches the BIER forwarding table according to the egress nodes BFER3/BFER6 and forwards the packet to a next-hop node BFR4.

In step 506, for the specific flow that arrives at BFR2, the BIER forwarding table is firstly searched as well to determine that the current node is not the egress node. Then the information of the specified path is searched, an entry in the BIER forwarding table that the node BFER3 serves as a next hop is taken out, an AND operation is performed on the entry and a bit string of the egress nodes, a NOT operation is performed on a result of the AND operation, and then an AND operation is performed on a result of the NOT operation and the bit string of the egress nodes to obtain reserved nodes BFER6/BFER8. The BIER header with the next hop of BFER3 is processed and the reserved nodes are merged, then the current level in a path list is added by 1, and the packet is further forwarded to the next hop BFER3 after related processing. For the ordinary flow that arrives at BFR4, a shortest path is searched, and it is found that the ordinary flow directly forwards the packet to BFR5.

In step 508, the specific flow further arrives at BFER3, and is forwarded to a next hop node BFR5 after the operation on the specified path is repeated. The ordinary flow arriving at BFR5 is also normally forwarded to BFER3 and BFER6.

In step 510, the specific flow arrives at BFR5, and is forwarded to BFER6 and BFER8 respectively after the operation on the specified path is repeated as well. The ordinary flow arriving at BFER3 and BFER6 is normally de-encapsulated and forwarded out of the BIER network.

In step 512, the specific flow arrives at BFER6 and BFER8, and is de-encapsulated and forwarded out of the BIER network after the operation on the specified path is repeated.

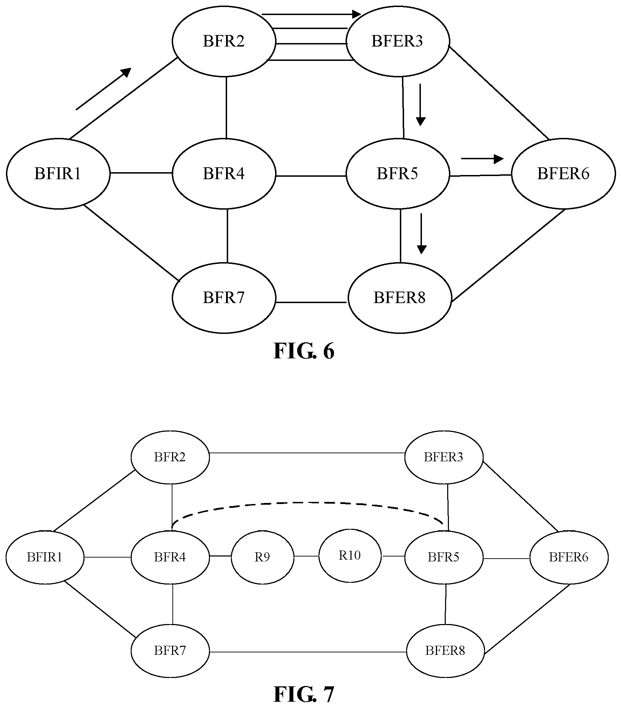

FIG. 6 is a schematic diagram showing a network for forwarding a specific flow in an ECMP link according to an embodiment of the present disclosure. The forwarding is via a specified path as follows: BFIR1-BFR2-BFR3-BFR5-BFER6/BFER8. There are multiple ECMP links between BFR2 and BFR3, according to an Entropy field of an ingress node, a selection operation is performed when there are multiple ECMP links, so as to ensure that the specific flow is always transmitted along this path.

FIG. 7 is a schematic diagram showing a hybrid network for implementing forwarding via a specified path according to an embodiment of the present disclosure. Nodes R9 and R10 that do not support BIER forwarding exist between nodes BFR4 and BFR5. Egress nodes of the a specific flow are BFER6 and BFER8. A specified forwarding path is as follows:
BFIR1-BFR4-BFR5-BFER6/BFER8.

Encapsulating and forwarding processes are the same as those described in the previous embodiments. When the BFR4 forwards the flow to the BFR5, the BFR4 may directly see that the BFR5 serves as the next hop of a tunnel in a tunnel forwarding manner. The transmission of the flow between R9 and R10 is performed in tunnel manners such as IP/UDP/GRE/MPLS. R9 and the R10 will not perform BIER-related processing.

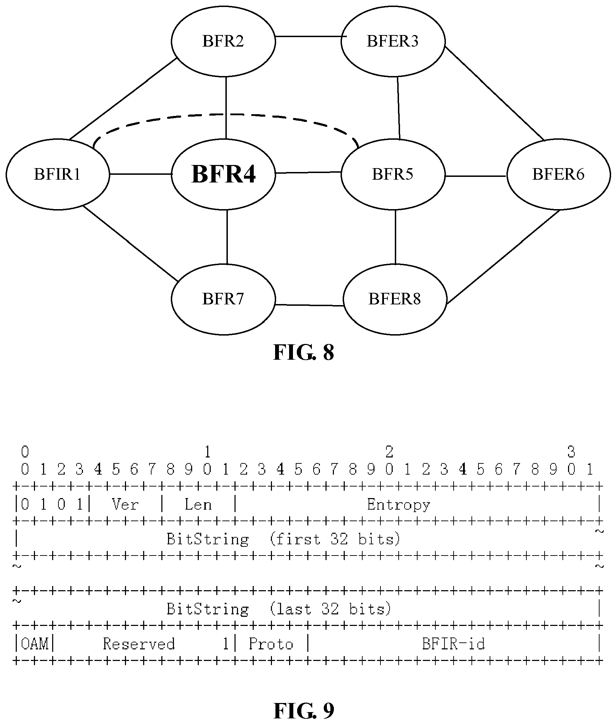

FIG. 8 is a schematic diagram showing a BIER-capable hybrid network for implementing forwarding via a specified path according to an embodiment of the present disclosure. Although node BFR4 supports BIER forwarding, it does not support BIER specified path forwarding described herein, accordingly, a special flow is forwarded between BFIR1 and BFR5 in a tunnel manner, it can be directly seen, on BFIR1, that BFR5 serves as a next hop of a tunnel. An encapsulation manner may be a MPLS tunnel mode. The BFR4 will see an ordinary BIER encapsulation header, and only an ordinary BIER forwarding capability is required to be supported without processing on the specified path.

FIG. 9 is a schematic diagram showing a BIER header according to an embodiment of the present disclosure. A Reserved rightmost position bit shown in FIG. 9 may be used to identify a flow constraint identifier, which indicates that a node list TLV of a specified path that needs to be processed immediately.

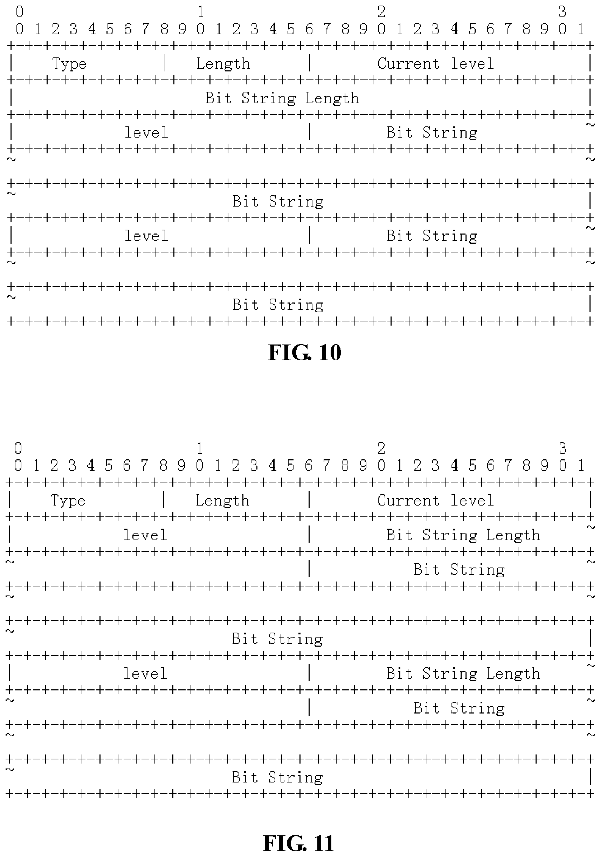

FIG. 10 is a first schematic diagram showing a BIER extended specified path node list TLV (Type-Length-Value) according to an embodiment of the present disclosure. In this manner, a node at an identical level as that of a specified path is represented by a bit string, and bit strings used for different levels have an identical length. A TLV type is 1.

FIG. 11 is a second schematic diagram showing a BIER extended specified path node list TLV according to an embodiment of the present disclosure. In this manner, a node at an identical level as that of a specified path is represented by a bit string, and bit strings used for different levels have different lengths. A TLV type is 2.

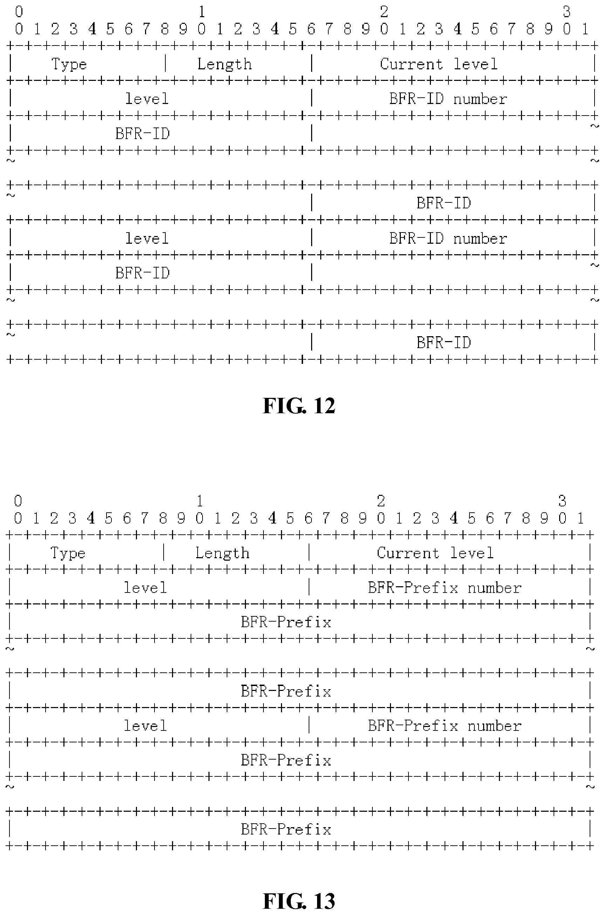

FIG. 12 is a third schematic diagram showing a BIER extended specified path node list TLV according to an embodiment of the present disclosure. In this manner, a node at an identical level as that of a specified path is represented by a BFR-ID list. A TLV type is 3.

FIG. 13 is a fourth schematic diagram showing a BIER extended specified path node list TLV according to an embodiment of the present disclosure. In this manner, a node at an identical level as that of a specified path is represented by a BFR-Prefix list. A TLV type 4 identifies a Prefix of an IPv4; and a TLV type 5 identifies a Prefix of an IPv6. FIG. 13 shows an IPv4 form. An IPv6 form adjusts the Prefix to a 128-bit format, or it may be represented by a prefix/mask manner.

Embodiments of the present disclosure further provide a device for transmitting a flow via a specified path, which may be disposed at an ingress node of a BIER network and includes:
a first transmission module, which is configured to transmit information of the specified path through which the flow passes.

Optionally, the information of the specified path is obtained through a routing computation performed by the ingress node or a controller, or generated according to configuration information.

Optionally, the information of the specified path is transmitted via information of a specified path after a header of a BIER packet.

Optionally, the header of the BIER packet further includes a flow constraint identifier which is used to indicate whether the information of the specified path is included or not.

Optionally, the information of the specified path is a tree list which has a root served by the ingress node and reaches each egress node, and level information of the tree list is used to indicate a level at which each node is located.

Optionally, a node identifier in the information of the specified path is identified in a manner of a bit-forwarding router identifier (BFR-ID).

Optionally, a set of nodes at an identical level in the information of the specified path is represented by using a bit string.

Optionally, when the set of nodes at the identical level in the information of the specified path is represented by using the bit string, different levels are identified by using a unified bit string length.

Optionally, when the set of nodes at the identical level in the information of the specified path is represented by using the bit string, different levels are identified by using different bit string lengths.

Optionally, the information of the specified path is represented by using a list formed by BFR-IDs of nodes.

Optionally, the information of the specified path is represented by using a bit-forwarding router prefix (BFR-Prefix) list.

Optionally, when the flow is a unicast flow, the level information in the information of the specified path is identical to point-to-multipoint multi-level information, or is preset level information of the unicast flow; and when the flow is a multicast flow, the level information in the information of the specified path includes different gradable node sets which are differentiated by different identification values.

As can be seen from the above, in a network where a flow can only be forwarded using a shortest path, the device provided by the embodiment of the present disclosure can enable other nodes to achieve forwarding the flow in the BIER network according to a specified path, by transmitting information of the specified path through which the flow passes. The device can adapt to various deployment requirements such as resource scheduling, make full use of redundant links, and has high practicality and adaptability.

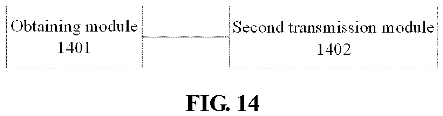

FIG. 14 is a structural diagram of a device for transmitting a flow via a specified path according to an embodiment of the present disclosure. The device shown in FIG. 14 may be disposed at a BIER network node and includes:
an obtaining module 401, which is configured to obtain information of the specified path through which the flow passes; and
a second transmission module 1402, which is configured to transmit a BIER packet of the flow according to the information of the specified path.

Optionally, the second transmission module 1402 includes:
a first processing sub-module, which is configured to continue to forward the BIER packet of the flow to a node at a next level of a current node in the information of the specified path.

Optionally, when the node of the BIER network is an egress node, the first processing sub-module is further configured to forward the BIER packet of the flow out of the BIER network, and clear information of the current node in information of the egress node of the flow.

Optionally, the first processing sub-module includes:
an obtaining unit, which is configured to obtain, from a BIER forwarding table, an entry that indicates a next-hop node is a node at a current level in the information of the specified path;
a computation unit, which is configured to perform a computation on bit information in the obtained entry and bit information of an egress node to obtain bit information of a reserved node; and
a processing unit, which is configured to perform a computation on the bit information of the reserved node, the bit information in the obtained entry, and the bit information of the egress node, modify level information of the information of the specified path, and continue to forward the BIER packet of the flow.

Optionally, the computation unit performs the computation on the bit information in the obtained entry and the bit information of the egress node to obtain the bit information of the reserved node through:
performing an AND operation on the bit information in the obtained entry and the bit information of the egress node, performing a NOT operation on a result of the AND operation, and performing an AND operation on a result of the NOT operation and a bit string of the egress node to obtain a bit string of a reserved node set.

Optionally, the processing unit performs the computation on the bit information of the reserved node, the bit information in the obtained entry, and the bit information of the egress node through:
performing an AND operation on the bit information in the obtained entry and the bit information of the egress node, and performing an OR operation on a result of the AND operation and the bit string of the reserved node set to obtain a computation result.

Optionally, the processing unit modifies the level information of the information of the specified path through:
adding 1 to the current level of the information of the specified path to obtain modified level information in the information of the specified path; or
deleting a foremost sibling list in the information of the specified path, and subtracting a length of deleted current level of nodes from a total length of the information of the specified path to obtain modified information of the specified path.

Optionally, the second transmission module 1402 transmits the BIER packet of the flow according to the specified path information through:
when a node at a next level of a current node in the information of the specified path is a node that does not support BIER forwarding, or a node that supports only BIER forwarding and does not support processing of a BIER specified path, communicating with a node in the information of the specified path whose level is below the node at the next level and which supports processing of the BIER specified path by establishing a tunnel.

In this optional solution, if a node that does not support BIER forwarding exists between two BIER nodes on the path, or a node that only supports BIER forwarding and does not support processing of a BIER specified path exists between the two BIER nodes, a tunnel is established between the two BIER nodes for communication. The passed node that does not support the BIER forwarding will not perceive a BIER header and contents in the BIER header. The passed node that does not support the processing of the BIER specified path will only perform ordinary BIER forwarding.

Optionally, the second transmission module 1402 is further configured to, when a link in the specified path through which the flow passes has an equal-cost routing link, indicate to transmit the flow by using the equal-cost routing link.

As can be seen from the above, in a network where a flow can only be forwarded using a shortest path, the device provided by the embodiment of the present disclosure can achieve forwarding the flow in the BIER network according to a specified path, by receiving information of the specified path through which the flow passes. The device can adapt to various deployment requirements such as resource scheduling, make full use of redundant links, and has high practicality and adaptability.

Embodiments of the present disclosure further provide a computer-readable storage medium stores computer-executable instructions therein, where the computer-executable instructions are used to perform the method according to any foregoing embodiment.

Those ordinarily skilled in the art may understand that all or a part of steps of the above embodiments may be implemented by using a flow of a computer program, and the computer program may be stored in a computer-readable storage medium. The computer program is executed on a corresponding hardware platform (such as a system, a device, an apparatus, a component and the like), and the computer program, when being executed, includes one or a combination of the steps of the method according to foregoing embodiments.

Optionally, all or a part of the steps of the above embodiments may also be implemented by using an integrated circuit, and these steps may be separately fabricated into individual integrated circuit modules, or a plurality of modules or steps among them may be fabricated into a single integrated circuit module. In this way, the present disclosure is not limited to any specific combination of hardware and software.

Each device/functional module/functional unit in the above embodiments may be implemented by employing a general-purpose computing device, which may be centralized on a single computing device, or may be distributed on a network composed of a plurality of computing devices.

When each device/functional module/functional unit in the above embodiments is implemented in a form of a software functional module and sold or used as an independent product, it may be stored in a computer-readable storage medium. The above-mentioned computer-readable storage medium may be a read-only memory, a magnetic disk or an optical disk.

### INDUSTRIAL APPLICABILITY

In a network where a flow can only be forwarded using a shortest path, the embodiments of the present disclosure can achieve forwarding a flow in a BIER network according to a specified path, thereby adapting to various deployment requirements such as resource scheduling, making full use of redundant links, and leading to high practicality and adaptability.

## Claims

1. A method for transmitting a flow via a specified path, comprising:
transmitting (S202), to at least one next hop node, by an ingress node of a bit indexed explicit replication, BIER, network, information of the specified path through which the flow passes;
**characterized by** that,
the information of the specified path is a tree list which has a root served by the ingress node and reaches all egress nodes, and level information of the tree list is used to indicate a level at which each node is located.

2. The method according to claim 1, wherein the information of the specified path is transmitted via information of a specified path after a header of a BIER packet; and
wherein the header of the BIER packet further comprises a flow constraint identifier which is used to indicate whether the information of the specified path is comprised or not.

3. The method according to claim 1, wherein the information of the specified path is obtained through a routing computation performed by the ingress node or a controller, or generated according to configuration information.

4. The method according to claim 1, wherein
a node identifier in the information of the specified path is identified in a manner of a bit-forwarding router identifier, BFR-ID, and wherein a set of nodes at an identical level in the information of the specified path is represented by using a bit string.

5. The method according to claim 4, wherein when the set of nodes at the identical level in the information of the specified path is represented by using the bit string, different levels are identified by using a unified bit string length; or
when the set of nodes at the identical level in the information of the specified path is represented by using the bit string, different levels are identified by using different bit string lengths.

6. The method according to claim 4, wherein the information of the specified path is represented by using a list formed by BFR-IDs of nodes; or
the information of the specified path is represented by using a bit-forwarding router prefix, BFR-Prefix, list.

7. The method according to claim 1, wherein
when the flow is a unicast flow, the level information in the information of the specified path is identical to point-to-multipoint multi-level information, or is preset level information of the unicast flow; and
when the flow is a multicast flow, the level information in the information of the specified path comprises different gradable node sets which are differentiated by different identification values.

8. A method for transmitting a flow via a specified path, comprising:
obtaining (S201), by a node of a bit indexed explicit replication, BIER, network, information of the specified path through which the flow passes; and
transmitting (S202), by the node of the BIER network, a BIER packet of the flow according to the information of the specified path; **characterized by**
the transmitting (S202), by the node of the BIER network, the BIER packet of the flow according to the information of the specified path comprises:
continuing to forward, by the node of the BIER network, the BIER packet of the flow to a node at a next level of a current node in the information of the specified path; and
when the node of the BIER network is an egress node, forwarding the BIER packet of the flow out of the BIER network by the node of the BIER network, and clearing information of the current node in egress node information of the flow by the node of the BIER network.

9. The method according to claim 8, wherein the continuing to forward, by the node of the BIER network, the BIER packet of the flow to the node at the next level of the current node in the information of the specified path comprises:
Obtaining, by the node of the BIER network from a BIER forwarding table, an entry that indicates a next-hop node is a node at a current level in the information of the specified path;
performing a computation on bit information in the obtained entry and bit information of an egress node to obtain bit information of a reserved node; and
performing a computation on the bit information of the reserved node, the bit information in the obtained entry, and the bit information of the egress node, modifying level information of the information of the specified path, and continuing to forward the BIER packet of the flow.

10. The method according to claim 9, wherein the modifying the level information in the information of the specified path comprises:
adding 1 to the current level in the information of the specified path to obtain modified level information in the information of the specified path; or
deleting a foremost sibling list in the information of the specified path, and subtracting a length of deleted current level of nodes from a total length of the information of the specified path to obtain modified information of the specified path.

11. The method according to claim 8, wherein the transmitting (S202), by the node of the BIER network, the BIER packet of the flow according to the specified path information comprises:
when a node at a next level of a current node in the information of the specified path is a node that does not support BIER forwarding, or a node that supports only BIER forwarding and does not support processing of a BIER specified path, communicating, by the node of the BIER network through establishing a tunnel, with a node in the information of the specified path whose level is below the node at the next level and which supports processing of the BIER specified path.

12. The method according to claim 8, further comprising: when a link in the specified path through which the flow passes has an equal-cost routing link, indicating to transmit the flow by using the equal-cost routing link.

13. A device for transmitting a flow via a specified path, disposed at an ingress node of a bit indexed explicit replication, BIER, network, comprising:
a first transmission module, which is configured to transmit (S202), to at least one next hop node, information of the specified path through which the flow passes;
**characterized by** that,
the information of the specified path is a tree list which has a root served by the ingress node and reaches all egress nodes, and level information of the tree list is used to indicate a level at which each node is located.

14. A device for transmitting a flow via a specified path, which is disposed at a node of a bit indexed explicit replication, BIER, network, comprises:
an obtaining module (1401), which is configured to obtain information of the specified path through which the flow passes; and
a second transmission module (1402), which is configured to transmit a BIER packet of the flow according to the information of the specified path;
**characterized by** that,
the second transmission module (1402), comprises:
a first processing sub-module, which is configured to continue to forward the BIER packet of the flow to a node at a next level of a current node in the information of the specified path; and
when the node of the BIER network is an egress node, forward the BIER packet of the flow out of the BIER network, and clear information of the current node in egress node information of the flow.

15. A non-transitory computer-readable storage medium for storing computer-executable instructions, **characterized by**, wherein the computer-executable instructions are arranged to execute the method according to any one of claims 1-12.

## Patentansprüche

1. Verfahren zum Übertragen eines Flusses über einen bestimmten Pfad, das Folgendes umfasst:
Übertragen (S202), an mindestens einen nächsten Sprungknoten, durch einen Eintrittsknoten eines Bit-Indexed-Explicit-Replication-, BIER-, Netzwerks, von Informationen des bestimmten Pfades, durch den der Fluss verläuft;
**dadurch gekennzeichnet, dass**
die Informationen des bestimmten Pfades eine Baumstruktur sind, die eine Wurzel aufweist, die vom Eintrittsknoten bedient wird und alle Austrittsknoten erreicht, und Ebeneninformationen der Baumstruktur genutzt werden, um eine Ebene anzudeuten, auf der sich jeder Knoten befindet.

2. Verfahren nach Anspruch 1, wobei die Informationen des bestimmten Pfades über Informationen eines bestimmten Pfades nach einer Überschrift eines BIER-Pakets übermittelt werden; und wobei die Überschrift des BIER-Pakets ferner eine Flussbeschränkungskennung umfasst, die genutzt wird, um anzudeuten, ob die Informationen des bestimmten Pfades umfasst sind oder nicht.

3. Verfahren nach Anspruch 1, wobei die Informationen des bestimmten Pfades durch eine Streckenführungsberechnung erhalten werden, die vom Eintrittsknoten oder einem Controller durchgeführt werden, oder gemäß Konfigurationsinformationen erzeugt werden.

4. Verfahren nach Anspruch 1, wobei
eine Knotenkennung in den Informationen des bestimmten Pfades durch einen Bit-Forwarding Router Identifier, BFR-ID, identifiziert wird, und wobei ein Satz von Knoten auf einer identischen Ebene in den Informationen des bestimmten Pfades durch die Nutzung einer Bitfolge repräsentiert wird.

5. Verfahren nach Anspruch 4, wobei, wenn der Satz von Knoten auf der identischen Ebene in den Informationen des bestimmten Pfades durch die Nutzung der Bitfolge repräsentiert wird, unterschiedliche Ebenen durch die Nutzung einer einheitlichen Bitfolgenlänge identifiziert werden; oder
wenn der Satz von Knoten auf der identischen Ebene in den Informationen des bestimmten Pfades durch die Nutzung der Bitfolge repräsentiert wird, unterschiedliche Ebenen durch die Nutzung unterschiedlicher Bitfolgenlängen identifiziert werden.

6. Verfahren nach Anspruch 4, wobei die Informationen des bestimmten Pfades durch die Nutzung einer Liste repräsentiert werden, die von BFR-IDs von Knoten gebildet wird; oder
die Informationen des bestimmten Pfades durch die Nutzung einer Bit-Forwarding-Router-Prefix-, BFR-Prefix-, Liste repräsentiert werden.

7. Verfahren nach Anspruch 1, wobei,
wenn der Fluss ein Unicast-Fluss ist, die Ebeneninformationen in den Informationen des bestimmten Pfades Punkt-zu-Mehrpunkt-Mehrebeneninformationen entsprechen oder voreingestellte Ebeneninformationen des Unicast-Flusses sind; und
wenn der Fluss ein Multicast-Fluss ist, die Ebeneninformationen in den Informationen des bestimmten Pfades unterschiedliche steigerbare Knotensätze umfassen, die sich durch unterschiedliche Identifikationswerte unterscheiden.

8. Verfahren zum Übertragen eines Flusses über einen bestimmten Pfad, das Folgendes umfasst:
Erhalten (S201), durch einen Knoten eines Bit-Indexed-Explicit-Replication-, BIER-, Netzwerks, von Informationen des bestimmten Pfades, durch den der Fluss verläuft; und
Übertragen (S202), durch den Knoten des BIER-Netzwerks, eines BIER-Pakets des Flusses gemäß den Informationen des bestimmten Pfades; **dadurch gekennzeichnet, dass**
das Übertragen (S202), durch den Knoten des BIER-Netzwerks, des BIER-Pakets des Flusses gemäß den Informationen des bestimmten Pfades Folgendes umfasst:
Fortsetzen des Weiterleitens, durch den Knoten des BIER-Netzwerks, des BIER-Pakets des Flusses an einen Knoten auf einer nächsten Ebene eines aktuellen Knotens in den Informationen des bestimmten Pfades; und
wenn der Knoten des BIER-Netzwerks ein Austrittsknoten ist, Weiterleiten des BIER-Pakets des Flusses aus dem BIER-Netzwerk durch den Knoten des BIER-Netzwerks und Freigeben von Informationen des aktuellen Knotens in Austrittsknoteninformationen des Flusses durch den Knoten des BIER-Netzwerks.

9. Verfahren nach Anspruch 8, wobei das Fortsetzen des Weiterleitens, durch den Knoten des BIER-Netzwerks, des BIER-Pakets des Flusses an den Knoten auf der nächsten Ebene des aktuellen Knotens in den Informationen des bestimmten Pfades Folgendes umfasst:
Erhalten, durch den Knoten des BIER-Netzwerks von einer BIER-Weiterleitungstabelle, eines Eintrags, der andeutet, dass ein nächster Sprungknoten ein Knoten auf einer aktuellen Ebene in den Informationen des bestimmten Pfades ist;
Durchführen einer Berechnung zu Bitinformationen im erhaltenen Eintrag und Bitinformationen eines Austrittknotens, um Bitinformationen eines reservierten Knotens zu erhalten; und
Durchführen einer Berechnung zu den Bitinformationen des reservierten Knotens, den Bitinformationen im erhaltenen Eintrag und den Bitinformationen des Austrittsknotens, Ändern von Ebeneninformationen der Informationen des bestimmten Pfades und Fortsetzen des Weiterleitens des BIER-Pakets des Flusses.

10. Verfahren nach Anspruch 9, wobei das Ändern der Ebeneninformationen in den Informationen des bestimmten Pfades Folgendes umfasst:
Addieren von 1 zur aktuellen Ebene in den Informationen des bestimmten Pfades, um geänderte Ebeneninformationen in den Informationen des bestimmten Pfades zu erhalten; oder
Löschen einer vordersten gleichrangigen Liste in den Informationen des bestimmten Pfades und Subtrahieren einer Länge der gelöschten aktuellen Ebene von Knoten von einer Gesamtlänge der Informationen des bestimmten Pfades, um geänderte Informationen des bestimmten Pfades zu erhalten.

11. Verfahren nach Anspruch 8, wobei das Übertragen (S202), durch den Knoten des BIER-Netzwerks, des BIER-Pakets des Flusses gemäß den Informationen des bestimmten Pfades Folgendes umfasst: wenn ein Knoten auf einer nächsten Ebene eines aktuellen Knotens in den Informationen des bestimmten Pfades ein Knoten, der kein BIER-Weiterleiten unterstützt, oder ein Knoten ist, der nur BIER-Weiterleiten unterstützt und nicht das Verarbeiten eines bestimmten BIER-Pfades unterstützt, Kommunizieren, durch den Knoten des BIER-Netzwerks durch das Herstellen eines Tunnels, mit einem Knoten in den Informationen des bestimmten Pfades, dessen Ebene unterhalb des Knotens auf der nächsten Ebene ist und der das Verarbeiten des bestimmten BIER-Pfades unterstützt.

12. Verfahren nach Anspruch 8, das ferner Folgendes umfasst: wenn eine Verknüpfung im bestimmten Pfad, durch den der Fluss verläuft, eine Routingverknüpfung mit gleichen Kosten aufweist, Andeuten zum Übertragen des Flusses durch die Nutzung der Routingverknüpfung mit gleichen Kosten.

13. Vorrichtung zum Übertragen eines Flusses über einen bestimmten Pfad, an einem Eintrittsknoten eines Bit-Indexed-Explicit-Replication-, BIER-, Netzwerks angeordnet, die Folgendes umfasst:
ein erstes Übertragungsmodul, das so konfiguriert ist, dass es an mindestens einen nächsten Sprungknoten Informationen des bestimmten Pfades, durch den der Fluss verläuft, überträgt (S202) ;
**dadurch gekennzeichnet, dass**
die Informationen des bestimmten Pfades eine Baumstruktur sind,
die eine Wurzel aufweist, die vom Eintrittsknoten bedient wird und alle Austrittsknoten erreicht, und Ebeneninformationen der Baumstruktur genutzt werden, um eine Ebene anzudeuten, auf der sich jeder Knoten befindet.

14. Vorrichtung zum Übertragen eines Flusses über einen bestimmten Pfad, die an einem Knoten eines Bit-Indexed-Explicit-Replication-, BIER-, Netzwerks angeordnet ist und Folgendes umfasst:
ein Empfangsmodul (1401), das so konfiguriert ist, dass es Informationen des bestimmten Pfades erhält, durch den der Fluss verläuft; und
ein zweites Übertragungsmodul (1402), das so konfiguriert ist,
dass es ein BIER-Paket des Flusses gemäß den Informationen des bestimmten Pfades überträgt;
**dadurch gekennzeichnet, dass**
das zweite Übertragungsmodul (1402) Folgendes umfasst: ein erstes Verarbeitungsuntermodul, das so konfiguriert ist, dass es das Weiterleiten des BIER-Pakets des Flusses an einen Knoten auf einer nächsten Ebene eines aktuellen Knotens in den Informationen des bestimmten Pfades fortsetzt; und wenn der Knoten des BIER-Netzwerks ein Austrittsknoten ist, das BIER-Paket des Flusses aus dem BIER-Netzwerk weiterleitet und Informationen des aktuellen Knotens in Austrittsknoteninformationen des Flusses freigibt.

15. Nicht vorübergehendes computerlesbares Speichermedium zum Speichern von computerausführbaren Anweisungen, **dadurch gekennzeichnet, dass** die computerausführbaren Anweisungen so angeordnet sind, dass sie das Verfahren nach einem der Ansprüche 1-12 ausführen.

## Revendications

1. Procédé pour transmettre un flux via un trajet spécifié, comprenant :
la transmission (S202), à au moins un nœud de saut suivant, par un nœud d'entrée d'un réseau de réplication explicite indexée par bit, BIER, d'informations du trajet spécifié à travers lequel passe le flux ;
**caractérisé par le fait que**,
les informations du trajet spécifié sont une liste d'arborescence qui possède une racine desservie par le nœud d'entrée et atteint tous les nœuds de sortie, et des informations de niveau de la liste d'arborescence sont utilisées pour indiquer un niveau auquel chaque nœud est situé.

2. Procédé selon la revendication 1, dans lequel les informations du trajet spécifié sont transmises via les informations d'un trajet spécifié après un en-tête d'un paquet BIER ; et
dans lequel l'en-tête du paquet BIER comprend en outre un identifiant de contrainte de flux qui est utilisé pour indiquer si les informations du trajet spécifié sont comprises ou non.

3. Procédé selon la revendication 1, dans lequel les informations du trajet spécifié sont obtenues au travers d'un calcul de routage réalisé par le nœud d'entrée ou un contrôleur, ou générées en fonction d'informations de configuration.

4. Procédé selon la revendication 1, dans lequel
un identifiant de nœud dans les informations du trajet spécifié est identifié à la manière d'un identifiant de routeur de transfert de bit, BFR-ID, et dans lequel un ensemble de nœuds à un niveau identique dans les informations du trajet spécifié est représenté en utilisant une chaîne de bits.

5. Procédé selon la revendication 4, dans lequel lorsque l'ensemble de nœuds au niveau identique dans les informations du trajet spécifié est représenté en utilisant la chaîne de bits, différents niveaux sont identifiés en utilisant une longueur de chaîne de bits unifiée ; ou
lorsque l'ensemble de nœuds au niveau identique dans les informations du trajet spécifié est représenté en utilisant la chaîne de bits, différents niveaux sont identifiés en utilisant différentes longueurs de chaîne de bits.

6. Procédé selon la revendication 4, dans lequel les informations du trajet spécifié sont représentées en utilisant une liste formée par des BFR-ID de nœuds ; ou
les informations du trajet spécifié sont représentées en utilisant une liste de préfixes de routeur de transfert de bit, BFR-Prefix.

7. Procédé selon la revendication 1, dans lequel
lorsque le flux est un flux de monodiffusion, les informations de niveau dans les informations du trajet spécifié sont identiques à des informations multi-niveaux point à multipoint, ou sont des informations de niveau prédéfinies du flux de monodiffusion ; et
lorsque le flux est un flux de multidiffusion, les informations de niveau dans les informations du trajet spécifié comprennent différents ensembles de nœuds ajustables qui sont différenciés par différentes valeurs d'identification.

8. Procédé pour transmettre un flux via un trajet spécifié, comprenant :
l'obtention (S201), par un nœud d'un réseau de réplication explicite indexée par bit, BIER, d'informations du trajet spécifié à travers lequel passe le flux ; et
la transmission (S202), par le nœud du réseau BIER, d'un paquet BIER du flux en fonction des informations du trajet spécifié ;
**caractérisé par le fait que**
la transmission (S202), par le nœud du réseau BIER, du paquet BIER du flux en fonction des informations du trajet spécifié comprend :
la poursuite du transfert, par le nœud du réseau BIER, du paquet BIER du flux vers un nœud à un niveau suivant d'un nœud actuel dans les informations du trajet spécifié ; et
lorsque le nœud du réseau BIER est un nœud de sortie, le transfert du paquet BIER du flux hors du réseau BIER par le nœud du réseau BIER, et l'effacement d'informations du nœud actuel dans des informations de nœud de sortie du flux par le nœud du réseau BIER.

9. Procédé selon la revendication 8, dans lequel la poursuite du transfert, par le nœud du réseau BIER, du paquet BIER du flux vers le nœud au niveau suivant du nœud actuel dans les informations du trajet spécifié comprend :
l'obtention, par le nœud du réseau BIER à partir d'une table de transfert BIER, d'une mention qui indique qu'un nœud de saut suivant est un nœud à un niveau actuel dans les informations du trajet spécifié ;
la réalisation d'un calcul sur des informations de bit dans la mention obtenue et des informations de bit d'un nœud de sortie pour obtenir des informations de bit d'un nœud réservé ; et
la réalisation d'un calcul sur les informations de bit du nœud réservé, les informations de bit dans la mention obtenue et les informations de bit du nœud de sortie, la modification d'informations de niveau des informations du trajet spécifié, et la poursuite du transfert du paquet BIER du flux.

10. Procédé selon la revendication 9, dans lequel la modification des informations de niveau dans les informations du trajet spécifié comprend :
l'ajout de 1 au niveau actuel dans les informations du trajet spécifié pour obtenir des informations de niveau modifiées dans les informations du trajet spécifié ; ou
la suppression d'une liste fraternelle la plus importante dans les informations du trajet spécifié, et la soustraction d'une longueur de niveau actuel supprimé de nœuds à partir d'une longueur totale des informations du trajet spécifié pour obtenir des informations modifiées du trajet spécifié.

11. Procédé selon la revendication 8, dans lequel la transmission (S202), par le nœud du réseau BIER, du paquet BIER du flux en fonction des informations de trajet spécifié comprend :
lorsqu'un nœud à un niveau suivant d'un nœud actuel dans les informations du trajet spécifié est un nœud qui ne prend pas en charge un transfert BIER, ou un nœud qui prend en charge uniquement un transfert BIER et ne prend pas en charge un traitement d'un trajet spécifié BIER, la communication, par le nœud du réseau BIER au travers de l'établissement d'un tunnel, avec un nœud dans les informations du trajet spécifié dont le niveau est inférieur au nœud au niveau suivant et qui prend en charge un traitement du trajet spécifié BIER.

12. Procédé selon la revendication 8, comprenant en outre : lorsqu'un lien dans le trajet spécifié à travers lequel passe le flux possède un lien de routage à coût égal, l'indication de transmettre le flux à l'aide du lien de routage à coût égal.

13. Dispositif pour transmettre un flux via un trajet spécifié, disposé au niveau d'un nœud d'entrée d'un réseau de réplication explicite indexée par bit, BIER, comprenant :
un premier module de transmission, qui est configuré pour transmettre (S202), à au moins un nœud de saut suivant, des informations du trajet spécifié à travers lequel passe le flux ;
**caractérisé par le fait que**,
les informations du trajet spécifié sont une liste d'arborescence qui possède une racine desservie par le nœud d'entrée et atteint tous les nœuds de sortie, et des informations de niveau de la liste d'arborescence sont utilisées pour indiquer un niveau auquel chaque nœud est situé.

14. Dispositif pour transmettre un flux via un trajet spécifié, qui est disposé au niveau d'un nœud d'un réseau de réplication explicite indexée par bit, BIER, qui comprend :
un module d'obtention (1401), qui est configuré pour obtenir des informations du trajet spécifié à travers lequel passe le flux ; et
un second module de transmission (1402), qui est configuré pour transmettre un paquet BIER du flux en fonction des informations du trajet spécifié ;
**caractérisé par le fait que**,
le second module de transmission (1402), comprend :
un premier sous-module de traitement, qui est configuré pour poursuivre le transfert du paquet BIER du flux vers un nœud à un niveau suivant d'un nœud actuel dans les informations du trajet spécifié ; et lorsque le nœud du réseau BIER est un nœud de sortie, transférer le paquet BIER du flux hors du réseau BIER, et effacer des informations du nœud actuel dans des informations de nœud de sortie du flux.

15. Support de stockage non transitoire lisible par ordinateur pour stocker des instructions exécutables par ordinateur, **caractérisé par le fait que**, dans lequel les instructions exécutables par ordinateur sont conçues pour exécuter le procédé selon l'une quelconque des revendications 1 à 12.
